# EUROPEAN PATENT SPECIFICATION

(11) **EP 2 593 861 B1**
(45) Date of publication and mention of the grant of the patent: **02.05.2018**
(21) Application number: 11735953.9
(22) Date of filing: 15.07.2011
(51) Int. Cl.: G06F 9/38

(54) **SYSTEM AND METHOD TO ALLOCATE PORTIONS OF A SHARED STACK**
SYSTEM UND VERFAHREN FÜR DIE ZUWEISUNG VON TEILEN EINES GEMEINSAMEN STAPELS
SYSTÈME ET PROCÉDÉ POUR L'ATTRIBUTION DE PARTIES D'UNE PILE PARTAGÉE

(30) Priority: 16.07.2010 US 837572
(43) Date of publication of application: 22.05.2013
(73) Proprietor: Qualcomm Incorporated, San Diego, CA 92121 (US)
(72) Inventor: SHANNON, Stephen R., San Diego CA 92121 (US); VENKUMAHANTI, Suresh K., San Diego CA 92121 (US); LESTER, Robert A., San Diego CA 92121 (US)
(74) Representative: Dunlop, Hugh Christopher
(86) International application number: PCT/US2011/044092
(87) International publication number: WO 2012/009587

(56) References cited:
- WO-A2-2006/111881
- US-A1- 2006 095 719
- US-A1- 2006 230 408
- US-A1- 2008 062 927

## Description

### I. Field

The present disclosure is generally related to data processing, and more particularly, to memory stack operations.

### II. Description of Related Art

Advances in technology have resulted in more powerful computing devices that may be used to perform various tasks. Computing devices typically include at least one processor. To improve the processing of instructions within computing devices, branch prediction is sometimes used by processors to anticipate branching within program code. A Return Address Stack (RAS) can be used by a microprocessor to predict return addresses for call/return type branches encountered during program execution. A RAS may be a special implementation of a stack (a last in first out (LIFO) data structure). Call instructions may cause a return address to be pushed onto the RAS. Return instructions may cause an address located at the top of the RAS to be popped off the stack and used to predict a return address. When the branch prediction is successful, the address popped off the top of the RAS may be used to redirect an instruction fetch unit of the processor. When the branch prediction is unsuccessful, a correct return address may be calculated in order to correctly redirect the instruction fetch unit.

Each thread of a multithreaded processor may use its own dedicated RAS and each RAS may have a fixed size. Each thread may use a different number of entries of their fixed-size RAS depending upon the instruction stream being executed by each thread. However, the use of multiple return address stacks adds cost to the system. US 2006/0095719 discloses a master and a slave tasks sharing the same stack memory and having their own stack pointers. The stack pointers go from the opposite side to the opposite direction.

### III. Summary

A particular embodiment may allow multithreaded access to a shared stack. Access to the shared stack may be dynamically allocated to multiple threads according to a current demand of each thread. Entries of the shared stack may be assigned and overwritten by the threads through the manipulation of thread pointers. Because thread pointers are moved instead of moving the stack address entries, processing and power demands may be reduced. The shared stack may include fewer entries than conventional, static multithreaded return address stacks because entries of the shared stack may be more efficiently distributed among the threads. Fewer stack entries may translate into smaller space demands on a die, as well as increased performance.

In a particular embodiment, an apparatus is disclosed that includes a shared stack. The apparatus further includes a controller operable to selectively allocate a first portion of the shared stack to a first thread and to selectively allocate a second portion of the shared stack to a second thread.

In another particular embodiment, a method of managing a stack shared by multiple threads of a processor includes allocating a first portion of a shared stack to a first thread and allocating a second portion of the shared stack to a second thread.

In another particular embodiment, a computer readable tangible medium stores instructions executable by a computer. The instructions include instructions that are executable by the computer to allocate a first portion of a shared stack to a first thread and to allocate a second portion of the shared stack to a second thread.

Particular advantages provided by at least one of the disclosed embodiments may result from the shared stack being configured for shared access by multiple threads. The shared stack may include fewer total entries than would be conventionally required by a system whose threads each access a separate stack. A smaller total number of entries may result in smaller space demands on a die, as well as reduced complexity and power demands. Reduced stack size and other advantages facilitated by one or more of the disclosed embodiments may further improve memory distribution and stack access efficiency.

Other aspects, advantages, and features of the present disclosure will become apparent after review of the entire application, including the following sections: Brief Description of the Drawings, Detailed Description, and the Claims.

### IV. Brief Description of the Drawings

FIG. 1 is a block diagram of a particular illustrative embodiment of a system configured to coordinate multithreaded access to a shared stack;
FIG. 2 is a block diagram of a particular illustrative embodiment of a system that includes an activated thread configured to access a shared stack;
FIG. 3 is a block diagram of a particular illustrative embodiment of system configured to enable a thread to dynamically access entries of a shared stack;
FIG. 4 is a block diagram of a particular illustrative embodiment of a system configured to coordinate multithreaded access to a shared stack as a second thread becomes active and accesses the shared stack;
FIG. 5 is a block diagram of a particular illustrative embodiment of a system configured to coordinate multithreaded access to a shared stack as a second thread acquires entries of the shared stack and prepares to overwrite an entry of a first thread;
FIG. 6 is a block diagram of a particular illustrative embodiment of a system configured to coordinate multithread access to a shared stack as a second thread overwrites an entry of a first thread;
FIG. 7 is a flow diagram of a particular illustrative embodiment of a method of managing a stack shared by multiple threads of a processor;
FIG. 8 is a flow diagram of a particular illustrative embodiment of a method of enabling multithreaded access to a shared stack; and
FIG. 9 is a block diagram of portable device including shared stack access across multiple threads.

### V. Detailed Description

A system is disclosed that includes a memory stack that is shared by multiple threads of a multi-threaded processor. Entries of the shared stack may be dynamically allocated to a given thread by a stack controller. With such allocation, each thread's allocated portion of the shared stack is sized for efficient stack use and in consideration of fairness policies. The shared stack may include fewer stack entries than would be used by separate stacks that are each dedicated for a distinct thread.

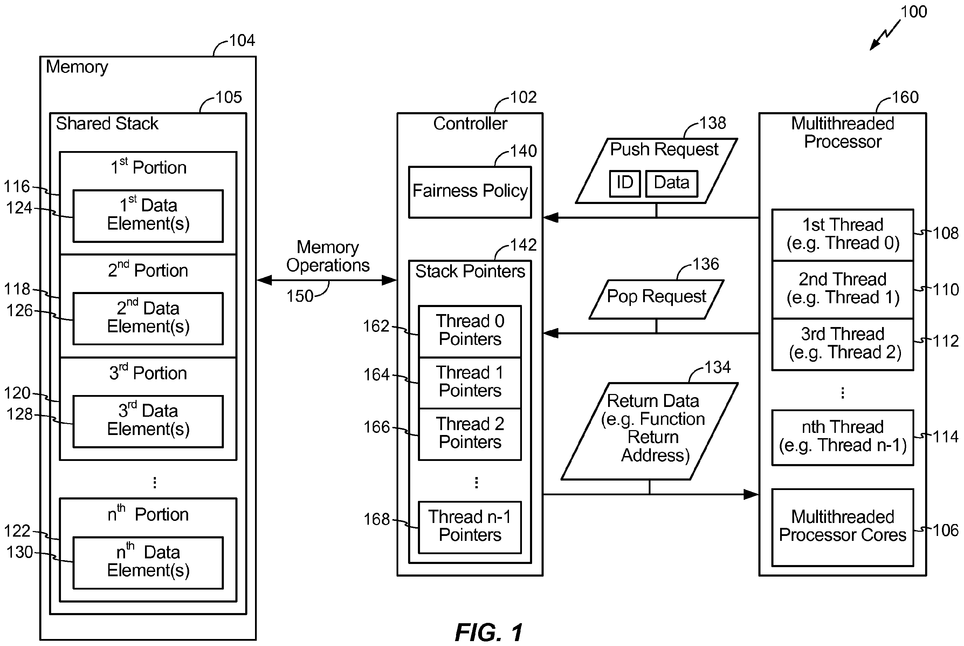

Referring to FIG. 1, a particular embodiment of a system to share a stack among multiple threads is depicted and generally designated 100. The system 100 includes a controller 102 that is coupled to a memory 104. The controller 102 is responsive to a multithreaded processor 160. The memory 104 includes a shared stack 105. The controller 102 is responsive to stack operation requests from the multithreaded processor 160 to allocate and de-allocate portions of the shared stack 105 to individual threads of the multithreaded processor 160 and to perform stack operations of the shared stack 105 for requesting threads.

The multithreaded processor 160 may include one or more multithreaded processor cores 106 that may execute one or more threads. For example, the multi-threaded processor 160 may execute a first thread 108 (thread 0), a second thread 110 (thread 1), a third thread 112 (thread 2), and an nth thread 114 (thread (n-1)). The multithreaded processor 160 may send stack operation requests to the controller 102 for one or more of the threads 108-114. For example, the multithreaded processor 160 may send a push request 138 to the controller 102 identifying a thread generating the push request 138 and further identifying data to be pushed onto the requesting thread's portion of the shared stack 105. As another example, the multithreaded processor 160 may send a pop request 136 to the controller 102. The pop request 136 may identify a requesting thread of the multiple threads 108-114 and request a return of the data that was most recently added to the requesting thread's portion of the shared stack 105.

The controller 102 is operative to selectively allocate portions of the shared stack 105 to individual threads. For example, the controller 102 may selectively allocate a first portion 116 of the shared stack 105 to the first thread 108, a second portion 118 of the shared stack 105 to the second thread 110, a third portion 120 of the shared stack 105 to the third thread 112, and an nth portion 122 of the shared stack 105 to the nth thread 114. In a particular embodiment, the shared stack 105 may include a hardware stack. Alternatively, the shared stack 105 may be implemented in other memory, such as random access memory (RAM).

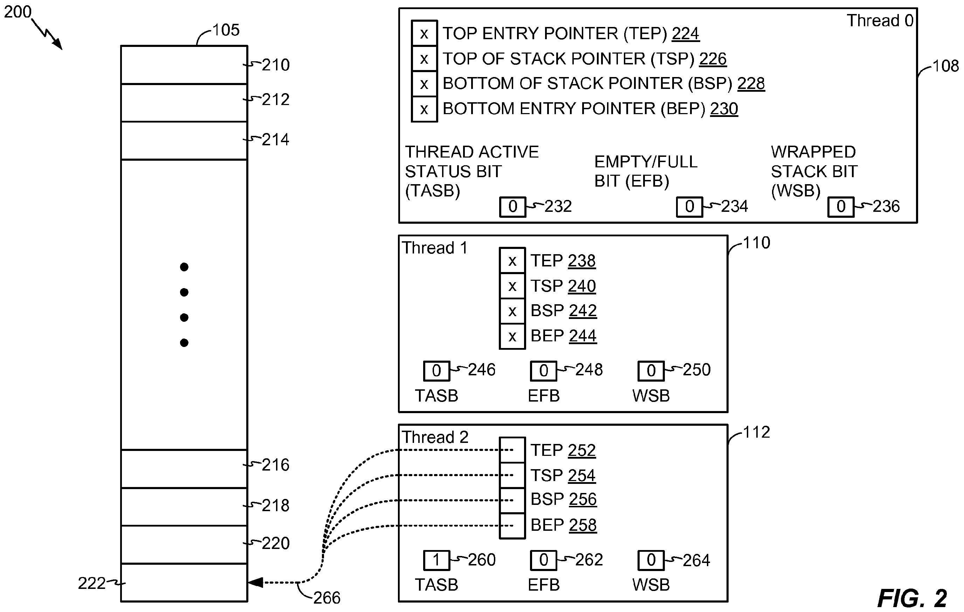

The controller 102 dynamically allocates the portions 116-122 of the shared stack 105 in response to thread requests subject to a fairness policy 140 and maintains data indicating allocation and usage of the allocated portions 116-122 via stack pointers 142. For example, the fairness policy 140 may indicate that the shared stack 105 is allocated amongst threads equally, in fixed-size portions for each thread, in fixed-size portions for each executing thread, in variable-sized portions for each thread, in variable-sized portions for each executing thread, in weighted average-sized portions with respect to a number of stack misses, or in some other fashion. The stack pointers 142 include pointers 162 corresponding to the first thread 108, pointers 164 corresponding to the second thread 110, pointers 166 corresponding to the third thread 112, and pointers 168 corresponding to the nth thread 114. For example, each of the thread pointers 162-168 may include a top entry pointer, a top-of-stack pointer, a bottom-of-stack pointer, a bottom entry pointer, and one or more additional status bits, as described with respect to FIGS. 2-6. The controller 102 uses the pointers 162-168 to maintain separate stacks allocated to each thread using circular buffers.

The first portion 116 may be allocated for stack operations corresponding to the first thread 108. The first portion 116 may include one or more stack entries (not shown) that may store one or more data elements 124 of the first thread 108. The second portion 118 may be allocated for stack operations of the second thread 110 and may include one or more stack entries that may store one or more data elements 126 of the second thread 110. The third portion 120 may be allocated for stack operations corresponding to the third thread 112 and may include one or more stack entries that may store one or more data elements 128 of the third thread 112. The nth portion 122 may be allocated for stack operation corresponding to the nth thread 114 and may include one or more stack entries that may store one or more data elements 130 of the nth thread 114.

During operation, one or more threads of the multithreaded processor 160 may generate a stack operation request, such as the push request 138. The controller 102 may receive the push request 138 and determine whether the requesting thread (e.g., the first thread 108) has sufficient space in its allocated portion (e.g., the first portion 116) to accommodate addition of data (e.g., to the data elements 124 of the first thread 108). If the first portion 116 does not include sufficient space, the controller 102 may determine whether to dynamically allocate additional space to the first thread 108 in accordance within the fairness policy 140. For example, when the other threads 110-114 are not using the remainder of the shared stack 105, the controller 102 may dynamically allocate additional memory to the first portion 116 to accommodate additional push requests corresponding to the first thread 108.

Alternatively, when multiple threads 110-114 are actively using the shared stack 105, the controller 102 may prevent the first thread 108 from being allocated more than a fair share of the shared stack 105, as determined by the fairness policy 140. Each portion of the shared stock may be implemented using a circular buffer. When the controller 102 determines that the push request 138 can be satisfied, the controller 102 initiates memory operations 150 that may include writing received data for the push request 138 to one of the data elements 124 of the first thread 108 within the first portion 116. The controller 102 may also update the first thread pointers 162 to indicate a change of a top entry of the stack when the first portion has been resized.

The controller 102 may also be configured to receive a pop request 136 from any of the threads, such as from the first thread 108. In response to the pop request 136, the controller 102 is configured to initiate memory operations 150 to read a most recently added data element from the data elements 124 of the first thread 108 and to return data 134 to the multithreaded processor 160 in response to the pop request 136. For example, when the shared stack 105 is implemented as a function return address stack (RAS), the return data 134 includes a function return address corresponding to the requested thread, such as the first thread 108. In addition, the controller 102 may update the first thread pointers 162 to indicate that the top-of-stack has been popped and to reduce an allocation of stack space usage within the first portion 116 in response to fulfilling the pop request 136.

In a particular embodiment where the controller 102 predicts the function return address via a first instruction, a mispredicted function return address from the shared stack 105 results in a corrected function return address being subsequently returned. For example, the multithreaded processor 160 may receive the pop request 136 in the form of an instruction to be executed (e.g., a return instruction). The return execution may take multiple cycles to complete. At the start of the execution of the return instruction, a return address may be popped from the shared stack 105. This popped return address may be a speculative address that is used to redirect instruction fetches. As the return instruction continues to execute (e.g., makes its way through a pipeline of the multithreaded processor 160), the multithreaded processor 160 may calculate the "actual" (e.g., non-speculative) return address. When the return instruction has completed execution, the speculative and the non-speculative return addresses may be compared. When the return addresses do not match (e.g., a branch mispredict has occurred), the "actual" return address may be used to fetch instructions. The "incorrectly" fetched instructions may be flushed.

As a result of the controller 102 implementing the fairness policy 140 to dynamically allocate portions of the shared stack 105 in response to a push operation request 138, the shared stack 105 may be used by multiple threads 108-114 and dynamically allocated, such that each thread 108-114 is provided a distinct portion of the shared stack 105 that operates as an individual stack for efficient utilization of the total stack entries within the shared stack 105. Allocation and de-allocation of portions 116-122 of the shared stack 105 between the individual threads 108-114 may be performed through operation of the controller 102 and by control of the stack pointers 142, such that data elements 124-130 need not be moved within the shared stack 105. Instead, the allocated portions 116-122 of the shared stack 105 may be "moved" around the data elements 124-130. As a result, the shared stack 105 may be efficiently used and may accommodate stack operations from the multiple threads 108-114 and may use fewer total stack entries than a system that includes separate dedicated stacks for each thread 108-114.

Although four threads and four portions are shown in FIG.1, the shared stack 105 may include two or more portions for use by two or more threads. Also, while the memory 104, the controller 102, and the processor 160 are shown as separate components, it should be understood that two or more of such components may be integrated on a single device.

Referring to FIG. 2, a block diagram of a particular illustrative embodiment of a system that illustrates execution of one of multiple threads configured to access a shared stack is depicted and generally designated 200. More particularly, a thread 112 may become active out of a reset state and may be allocated an entry 222 of the shared stack 105. Threads 108, 110, and 112 of FIG. 2 may be the same as the threads 108, 110, and 112 of FIG. 1, and the shared stack 105 of FIG. 2 may be the same as the shared stack 105 of FIG. 1. The thread 112 may acquire ownership of the entry 222 of the shared stack 105 through the use of its pointers 252, 254, 256, and 258.

The thread 112 (e.g., thread 2) may include a top entry pointer (TEP) 252 to which the thread 112 may write. The top entry pointer 252 may point to a top-most entry within the shared stack 105. The thread 112 may also include a top of stack pointer (TSP) 254. The top of stack pointer 254 may point to a top, or most recently written, entry within the shared stack 105 associated with the thread 112. The most recently written entry may include data that would be returned upon a stack pop operation. A bottom of stack pointer (BSP) 256 included within the thread 112 may point to an oldest valid entry within the shared stack 105 that is associated with the thread 112. The thread 112 may further include a bottom entry pointer (BEP) 258. The bottom entry pointer 258 may point to a bottom-most entry of the shared stack 105 to which the thread 112 may write. The thread 112 may further include a thread active status bit (TASB) 260. The thread active status bit 260 may indicate if the thread 112 is executing a process. If the thread 112 is not executing the process, the thread 112 may not be allocated an entry of the shared stack 105.

The thread 112 further includes a wrapped stack bit (WSB) 264. The wrapped stack bit 264 may indicate whether the shared stack 105 has wrapped in response to the top of stack pointer 254 and/or bottom of stack pointer 256 advancing to point to a common entry. For example, the wrapped stack bit 264 may be set to a logic one value to indicate that the top of stack pointer 254 has wrapped around to reach the bottom of stack pointer 256. Where the wrapped stack bit 264 is set to a logic one value, a subsequent push may cause both the bottom of stack pointer 256 and top of stack pointer 254 to increment. The push operation may additionally cause the oldest entry in the shared stack (pointed to by the bottom of stack pointer 256) to be overwritten. Where a pop operation from the shared stack 105 occurs while the wrapped stack bit 264 of the thread has the logic one value, the wrapped stack bit 264 may transition to a zero value.

The thread 112 also includes an empty/full bit (EFB) 262. The empty/full bit 262 may be configured to indicate whether an entry of the shared stack 105 associated with the thread 112 is used. For example, the empty/full bit 262 may include a logic one value when data of the thread 112 is present in the shared stack 105. Conversely, the empty/full bit 262 may include a logic zero value when no data of the thread 112 is stored within the shared stack 105. Where the empty/full bit 262 is a logic zero value and a push operation is made, the empty/full bit 262 may transition to a logic one value. The empty/full bit 262 may transition to a logic zero value if a pop operation occurs while the top of stack pointer 254 and the bottom of stack pointer 256 both point to the same entry and while the wrapped stack bit 264 equals the logic zero value.

Generally, threads may be allocated or "own" entries of the shared stack 105 that are bounded by their top entry pointer and their bottom entry pointer. A thread may write data to such "owned" entries. In addition, threads may be considered to "utilize" entries between their top of stack pointer and their bottom of stack pointer. Thus, entries of the shared stack 105 may be owned by a particular thread, owned and utilized by a particular thread, or neither owned nor utilized by a particular thread.

Similar to the thread 112, the thread 110 (i.e., thread 1) may include a top entry pointer 238 and a top of stack pointer 240. The thread 110 may further include a bottom of stack pointer 242 and a bottom entry pointer 244. A thread active status bit 246, an empty/full bit 248, and a wrapped stack bit 250 may also be included within the thread 110.

The thread 108 (i.e., thread 0) may include a top entry pointer 224 and a top of stack pointer 226. The thread 108 may further include a bottom of stack pointer 228 and a bottom entry pointer 230. A thread active status bit 232, an empty/full bit 234, and a wrapped stack bit 236 may also be included within the thread 108.

The shared stack 105 may include entries 210, 212, 214, 216, 218, 220, and 222 that store memory addresses of instructions. The entries 210, 212, 214, 216, 218, 220, and 222 may be configured to be shared by the threads 108, 110, and 112. During a single threaded operation, the thread 112 may become active (i.e., begin to execute a process). The top entry pointer 252, the top of stack pointer 254, the bottom of stack pointer 256, and the bottom entry pointer 258 may be set to point to the entry 222, as indicated by the dashed lines 266. The thread 112 may be said to "own" the entry 222 (e.g., the thread 112 may write data to the entry 222).

The empty/full bit 262 and the wrapped stack bit 264 bit may be set to indicate an empty condition (e.g., a logic zero value), and the thread active status bit 260 may be set to indicate an active condition (e.g., a logic one value). As calls are made by the process executing on the thread 112, an address may be pushed on the shared stack 105 into the entry 222 indicated by the top of stack pointer 254. The address may indicate a return address.

Where a subsequent call is made by the process executing on the thread 112, another address may be pushed onto the shared stack 105 into the entry 220 above the entry 222 indicated by the top of stack pointer 254. The push may cause the top entry pointer 252 and the top of stack pointer 254 to dynamically increment to point to the newly written entry 220. The incrementing may thus allocate to the thread 112 one or more additional entries of the shared stack 105. Where the process executing on the thread 112 indicates a return, a pop operation from the shared stack 105 may occur to retrieve a return predicted address. The pop operation may cause the top of stack pointer 254 of the thread 112 to decrement, but the top entry pointer 252 may not decrement.

A branch mispredict may be caused by an inaccurate return address being popped from the shared stack 105. In response, all data stored in the stack 105 and associated with the mispredicting thread may be discarded and stack construction for the thread may be restarted. For example, when the thread 112 mispredicts, the reconstruction for the thread 112 may be initiated by setting the top of stack pointer 254 equal to the bottom of stack pointer 256, setting the state of the empty/full bit 262 to indicate an empty state, and setting the wrapped stack bit 264 to indicate no wrapping. Pop requests may be avoided while the empty/full bit 262 equals a zero value, which may save processing power.

FIG. 2 depicts operations with respect to a single thread. For example, the thread 112 may become active out of a reset state. Thread pointers of the thread 112 may initially point to a single entry (e.g., the entry 222) of the shared stack 105. The thread 112 may thus be considered to have "anchored" itself at the entry 222 of the shared stack 105 upon becoming active out of the reset state. As calls are made by a process being executed by the thread 112, the thread pointers may be updated (e.g., "growing" the thread 112's allocated portion of the shared stack 105) while addresses stored within the shared stack 105 may not shift. Updating thread pointers rather than shifting the addresses within a shared stack may reduce power consumption, hardware demands, and overall complexity.

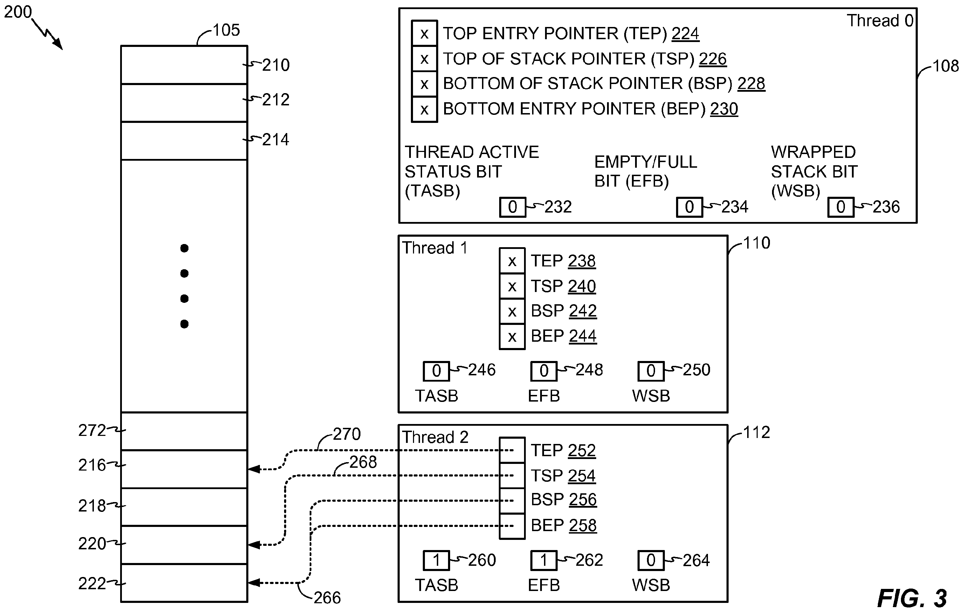

FIG. 3 illustrates a block diagram of the system 200 at a different processing state than depicted in FIG. 2, including the active thread 112 executing a process and dynamically accessing multiple entries 216, 218, 220, and 222 of the shared stack 105. The threads 108 and 110 are inactive. The thread 112 has, in addition to the entry 222, also been allocated entries 216, 218, and 220 of the shared stack 105. The entry 272 may be unused.

The top entry pointer 252 may point to the entry 216, as indicated by the dashed line 270. As indicated by the dashed line 268, the top of stack pointer 254 may point to the entry 220. Both the bottom of stack pointer 256 and the bottom entry pointer 258 point to the entry 222, as indicated by the dashed lines 266. As such, the thread 112 may be allocated, or "own," the entries 216, 218, 220, and 222, as bounded by the line 270 (logically pointing from the top entry pointer 252) and the line 266 (logically pointing from the bottom entry pointer 258).

FIG. 3 illustrates dynamic allocation of entries from the shared stack 105 to the thread 112. The allocation may occur by reassigning thread pointers instead of shifting entries in the shared stack 105, which may facilitate improved memory distribution, improved power efficiency, and reduced hardware demands.

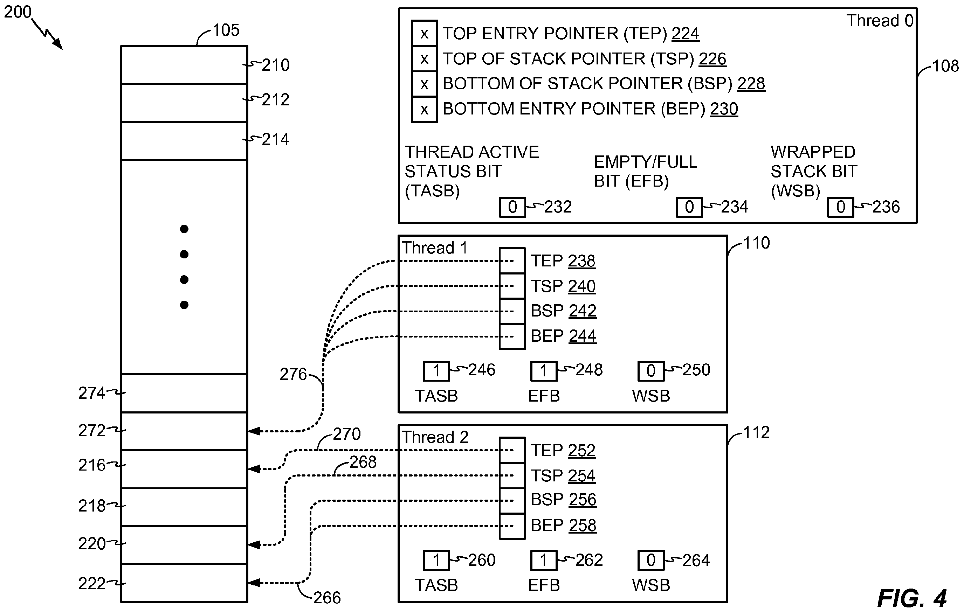

FIG. 4 is a block diagram of a particular illustrative embodiment of the system 200 where the thread 110 (i.e., thread one) has become active and has been allocated and anchored itself within the unused entry 272 of the shared stack 105. The entry 272 may be located between a first group of entries 210, 212, 214, and 274 and a second group of entries 216, 218, 220 and 222 claimed by the thread 112 (i.e., thread 2).

Upon becoming active (e.g., actively executing a process), the thread 110 may anchor itself within the entry 272 of the shared stack 105. The thread 110 may push a data element into the shared stack 105 within the entry 272. In a particular embodiment, the entry 272 may have been previously unallocated to, or unclaimed by, another thread. In another particular embodiment, the entry used to anchor the thread may previously have been allocated to another thread. As indicated by the dashed line 276 of FIG. 4, the top entry pointer 238, the top of stack pointer 240, the bottom of stack pointer 242, and the bottom entry pointer 244 point to the entry 272.

The thread 110 may claim another entry and push an additional data element onto the claimed entry of the shared stack 105 into entry 274.

FIG. 4 illustrates multiple active threads dynamically accessing the shared stack 105. Entries of the shared stack 105 may dynamically be allocated between the active threads by modifying thread pointers of the active threads. The active threads may be allocated entries of the shared stack 105 according to their current demand, which may facilitate efficient stack utilization.

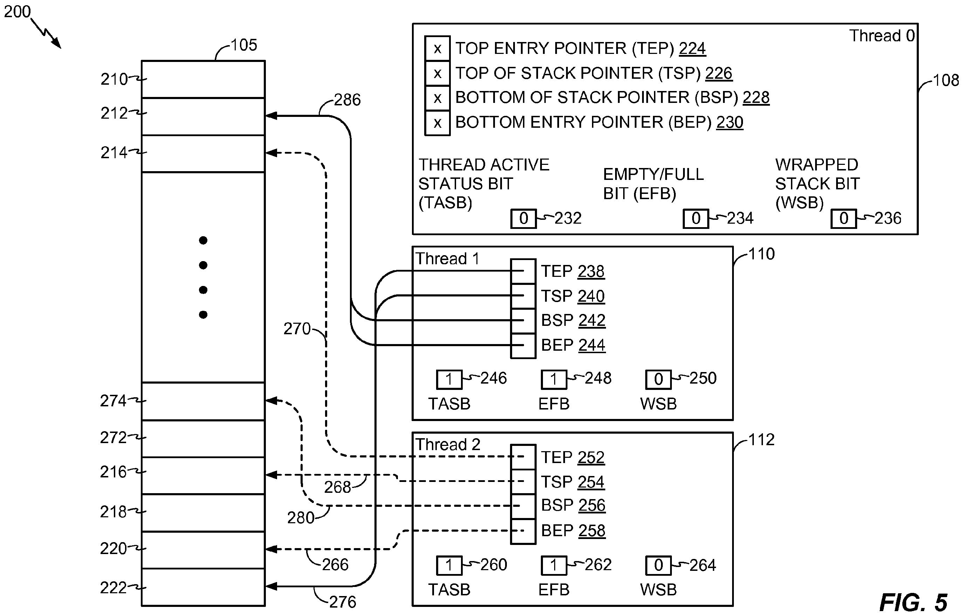

Referring to FIG. 5, a particular illustrative embodiment of the system 200 is depicted, including the shared stack 105 and the three threads 108, 110, and 112 at a different processing state than depicted in FIG. 4. The thread 110 and the thread 112 are active and accessing the shared stack 105. For example, the thread 110 has claimed additional entries and is preparing to overwrite an entry of the thread 112.

The thread 112 may own the entries of the shared stack 105 from 214 indicated by the dashed line 270 (that logically points from the top entry pointer 252) to the entry 220 indicated by the dashed line 266 (that logically points from the bottom entry pointer 258).

Similarly, the thread 110 may own the entries of the shared stack 105 bounded by the entry 222 (indicated by the line 276 that logically points from the top entry pointer 238) and wrapping around the stack 105 to include the entries 210 and 212 (indicated by the line 286 that logically points from the bottom entry pointer 244). The thread 110 may be said to be wrapped around within the shared stack 105 because the bottom of stack pointer 242 is above the top of stack pointer 240. The thread 110 thus owns entries 210, 212, and 222. The portion of the shared stack 105 owned by the thread 110 is thus contiguous with the thread 112, and no free entries exist for the thread 110 to claim in response to a push.

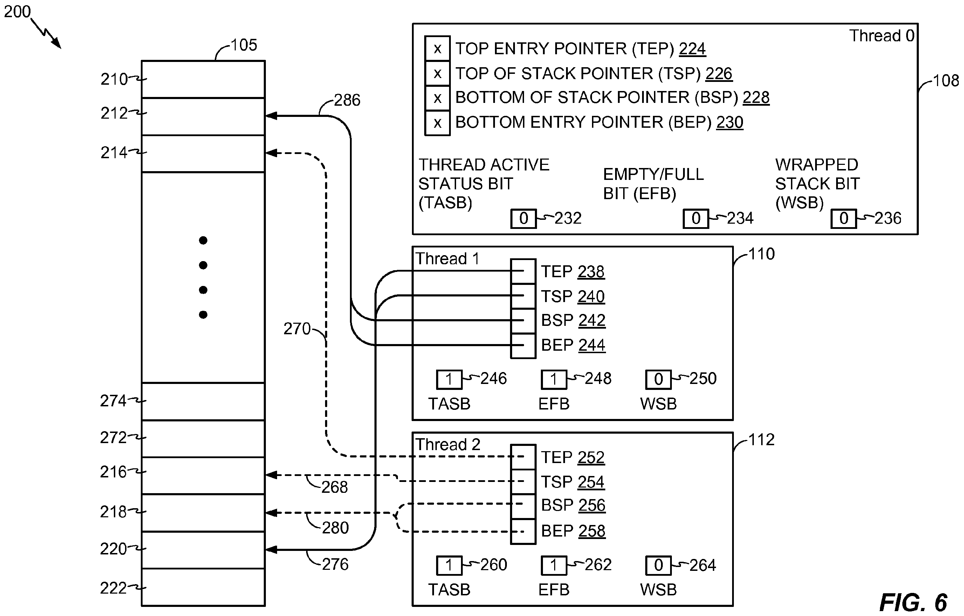

Where the thread 110 performs a push onto the shared stack 105 and the top of stack pointer 240 is pointing at the same entry as the top entry pointer 238, the data may be pushed to one of two locations. For example, the thread 110 may increment both the top of stack pointer 240 and the top entry pointer 238, thereby claiming a new entry and more stack space to store the newly pushed data, as described in FIG. 6. Alternatively, the thread 110 may wrap the top of stack pointer 240 around (leaving the top entry pointer 238 in place) and write the data into the entry pointed at by its bottom entry pointer 244. Which process is chosen may depend on whether the subsequent entry after the top entry pointer 238 is already claimed and whether the thread 110 is already using its fair share of the shared stack 105.

Where the entry 220 above the entry 222 pointed to by the top entry pointer 238 is unclaimed, the thread 110 may claim the entry 220 by updating the top entry pointer 238. The thread 110 may further set the top of stack pointer 240 to point at the same entry 220.

Where the entry 220 above the entry 222 pointed to by the top entry pointer 238 is claimed by another thread, and the thread 110 already owns at least its fair share of the stack 105, a subsequent push may not allow the thread 110 to claim the additional stack entry 220. Instead, the top of stack pointer 240 may wrap around from the top entry pointer 238 to the bottom entry pointer 244.

Where the entry 220 above the entry 222 pointed to by the top entry pointer 238 is claimed by another thread, and the thread 110 does not yet own its fair share of the shared stack 105, a push may be allowed to claim an entry 220 from another thread 112. The entry 220 may be claimed by updating the bottom entry pointer 258 of the thread 112 and updating the top entry pointer 238 of the thread 110. Pointers of the thread 112 may also be updated to reflect the "loss" of the entry 220, as described with reference to FIG. 6. The thread 110 may continue to claim entries in this manner until reaching its fair share of the shared stack 105.

FIG. 5 illustrates shared stack access between multiple threads. As illustrated in FIG. 5, because thread 112 is wrapped around within its own portion of the shared stack 105 (i.e., its top of stack pointer 268 is below its bottom of stack pointer 280), the thread 110 may claim an entry from a middle of the stack entries utilized by the thread 112 rather than from the bottom of the stack entries utilized by the thread 112. This may result in the thread 112 losing the stack entry 220 located in the middle of its stack instead of from the bottom of its stack. As a result, the stack of the thread 112 may be corrupt below the entry 218. Therefore, the bottom of stack pointer 256 may be moved to the entry 218, as illustrated in FIG. 6. Thus, threads may dynamically access the shared stack 105 according to their demand so long as there are enough entries. When entries become scarce, threads may forfeit entries to achieve fair stack utilization (e.g., in accordance with a fairness policy).

As illustrated in FIG. 5, the thread 112 may "own" the entries 214-220 and may "utilize" the entries 216-220 and the entries 214-274. The entry 220 is therefore both "owned" and "utilized" by the thread 112 when the entry 220 is claimed by the thread 110.

Referring to FIG. 6, another particular illustrative embodiment of the system 200 is depicted including the shared stack 105 and the three threads 108, 110, and 112 at a different processing state than depicted in FIG. 5. For example, the thread 110 has claimed and overwritten an entry of the thread 112.

The thread 112 may own the entries of the shared stack 105 from 214 bounded by the dashed line 270 (that logically points from the top entry pointer 252) to the entry 218 bounded by the dashed line 280 (that logically points from the bottom entry pointer 258). The thread 112 may have lost the entry 220 to the thread 110. Thus, in the particular embodiment illustrated in FIG. 6, the thread 112 may lose an entry 220 from the middle of its "utilized" portion of the shared stack 105. The bottom of stack pointer 256 of the thread 112 may have been updated from pointing to 274 (e.g., as illustrated in FIG. 5) to point to the new bottom entry 218.

Similarly, the thread 110 may own the entries of the shared stack 105 bounded by the entry 220 (indicated by the line 276 that logically points from the top entry pointer 238) and wrapping around the stack 105 to include the entries 210 and 212 (indicated by the line 286 that logically points from the bottom entry pointer 244). The thread 110 thus owns entries 210, 212, 220, and 222. The thread 112 has lost the entry 220 to the thread 110.

According to a particular embodiment, a thread 112 that loses a valid entry 220 (e.g., an entry located between a bottom of stack pointer 256 and a top of stack pointer 254) may invalidate any entries older than the entry 220 that is lost. To this end, the thread 112 may set its bottom of stack pointer 256 to point towards the same entry as the newly incremented bottom entry pointer 258.

FIG. 6 illustrates access of the shared stack 105 by multiple threads during which one thread may claim and overwrite an entry owned by another thread. The entry may be claimed by modifying thread pointers and without moving entries within the shared stack 105. The shared stack 105 may be dynamically allocated between threads according to their current demand, which may facilitate efficient stack utilization.

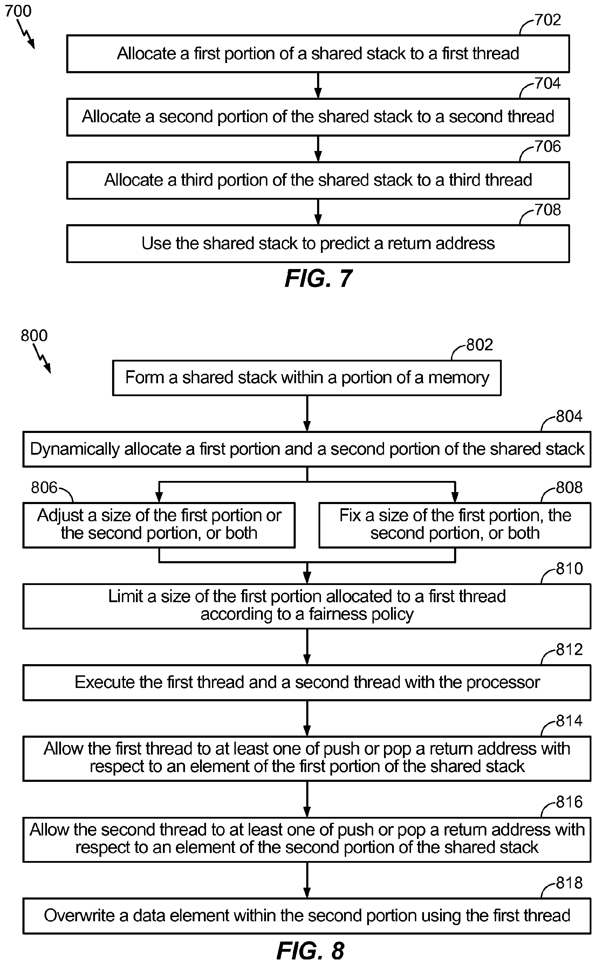

FIG. 7 illustrates a flow diagram of a particular illustrative embodiment of a method 700 of managing a stack shared by multiple threads of a processor. As described herein, the illustrative method 700 may be performed by the system 100 of FIG. 1 or the system 200 of FIG. 2.

A first portion of a shared stack may be allocated to a first thread, at 702. For example, the first portion 116 of the shared stack 105 of FIG. 1 may be allocated to the first thread 108. To further illustrate, the first thread 108 may execute a process that demands additional space of the shared stack 105. Pointers 162 of the first thread 108 may point to the first portion 116 (e.g., an additional entry) of the shared stack 105 to obtain control of the first portion 116.

A second portion of the shared stack may be allocated to a second thread, at 704. For example, the second portion 118 of the shared stack 105 of FIG. 1 may be allocated to the second thread 110. To further illustrate, the second thread 110 may execute a process that requests additional space of the shared stack 105. Pointers 164 of the second thread 110 may point to the second portion 118 of the shared stack 105 to obtain control of the second portion 118.

A third portion of the shared stack may be allocated to a third thread, at 706. For example, the third portion 120 of the shared stack 105 of FIG. 1 may be allocated to the third thread 112. To further illustrate, the third thread 112 may execute a process that requests additional space of the shared stack 105. Pointers 166 of the third thread 112 may point to the third portion 120 of the shared stack 105 to obtain control of the third portion 120.

The shared stack may be used to predict a return address, at 708. For example, the shared stack 105 of FIG. 1 may be used to predict a function return address included in the return data 134.

It should be noted that although the method 700 of FIG. 7 depicts allocating portions of a shared stack to multiple threads prior to any use of the shared stack, such ordering is for illustrative purposes only and should not be deemed limiting. Any thread that is allocated a portion of the shared stack may begin to use its allocated portion irrespective of when other threads are allocated other portions of the shared stack.

FIG. 7 thus shows a method 700 of managing a stack shared by multiple threads of a processor. According to a particular embodiment, entries of a shared stack may be dynamically allocated according to thread requests. The dynamic allocation may facilitate branch prediction in a manner that translates into increased stack efficiency, smaller space demands on a die, as well as improved performance.

FIG. 8 illustrates a flow diagram of a particular illustrative embodiment of a method 800 of enabling multithreaded access to a shared stack. As described herein, the illustrative method 800 may be performed by the system 100 of FIG. 1 or the system 200 of FIG. 2.

A shared stack may be formed within a portion of a memory, at 802. For example, the shared stack 105 of FIG. 1 may be formed within the memory 104.

A first portion and a second portion of the shared stack may be dynamically allocated, at 804. For example, the first portion 116 of the shared stack 105 of FIG. 1 may be dynamically allocated to the first thread 108. To further illustrate, the first thread 108 may execute a process that requests additional space of the shared stack 105. Pointers 162 of the first thread 108 may point to the first portion 116 (e.g., an additional entry) of the shared stack 105 to obtain control of the first portion 116. Similarly, the second portion 118 of the shared stack 105 of FIG. 1 may be allocated to the second thread 110. To further illustrate, the second thread 110 may execute a process that requests additional space of the shared stack 105. Pointers 164 of the second thread 110 may point to the second portion 118 of the shared stack 105 to obtain control of the second portion 118.

The size of the first portion or the second portion, or both, may be adjusted, at 806. For example, the size of the first portion 116 may be dynamically adjusted according to a request of the first thread 108. Pointers 162 of the first thread 108 may point to entries of the first portion 116 to shrink or grow the first portion 116 to meet the request. Similarly, the size of the second portion 118 may be dynamically adjusted according to a request of the second thread 110. Pointers 164 of the second thread 110 may point to entries of the second portion 118 to shrink or grow the second portion 118 to meet the request.

Alternatively, a size of the first portion, the second portion, or both, may be fixed, at 808. For example, a size of the first portion 116 of FIG. 1, the second portion 118, or both, may be fixed. To further illustrate, pointers 162-168 (e.g., a top entry pointer and a bottom entry pointer) of one or more of the threads 108, 110, 112, and 114 may be set to particular fixed values. The fixed values may be selected such that the shared stack 105 is equally partitioned among the threads 108, 110, 112, and 114.

The size of the first portion allocated to the first thread may be limited according to a fairness policy, at 810. For example, the size of the first portion 116 allocated to the first thread 108 may be limited according to the fairness policy 140 of FIG. 1. To further illustrate, the size of the first portion 116 may be limited based upon at least one of a maximum number of entries associated with the first portion 116 and a percentage of usage of the shared stack 105. For example, the fairness policy 140 may limit the size of the first portion 116 and associated number of entries accessible to the first thread 106 when the first thread 108 has met or exceeded a fair share threshold. The fair share threshold may be determined by dividing a total number of entries in the shared stack 105 by the number of currently active threads 108, 110, 112, and 114.

The first thread and the second thread may be executed with the processor, at 812. For example, one of the multithreaded processor cores 106 may execute the first thread 108 and the second thread 110.

The first thread may be allowed to push or pop a return address with respect to an element of the first portion of the shared stack, at 814. For example, the first thread 108 may be allowed to perform a pop 136 or a push 138 of a return address at one of the data elements 124 of the first portion 116.

The second thread may be allowed to perform a push or pop of a return address with respect to an element of the second portion of the shared stack, at 816. For example, the second thread 110 may be allowed to perform a pop 136 or a push 138 of a return address at the second data element 126 of the second portion 118.

A data element within the second portion may be overwritten using the first thread, at 818. For example, the second data element 126 of the second portion 118 may be overwritten using the first thread 108. To illustrate, the first thread 108 may execute a push 138 that causes an oldest entry in the second portion 118 to be overwritten.

FIG. 8 thus illustrates a method 800 of sharing stack access across multiple threads. The method includes dynamically allocating access to the shared stack according to current requests of each thread. Entries of the shared stack may be acquired and overwritten by the threads by manipulating pointers belonging to the threads. Because thread pointers are updated, instead of moving the address entries stored within the shared stack, processing and power consumption may be reduced. Also, the fewer numbers of stack entries required to achieve equivalent performance may further facilitate smaller space demands on a die. Improved memory distribution may further increase stack performance.

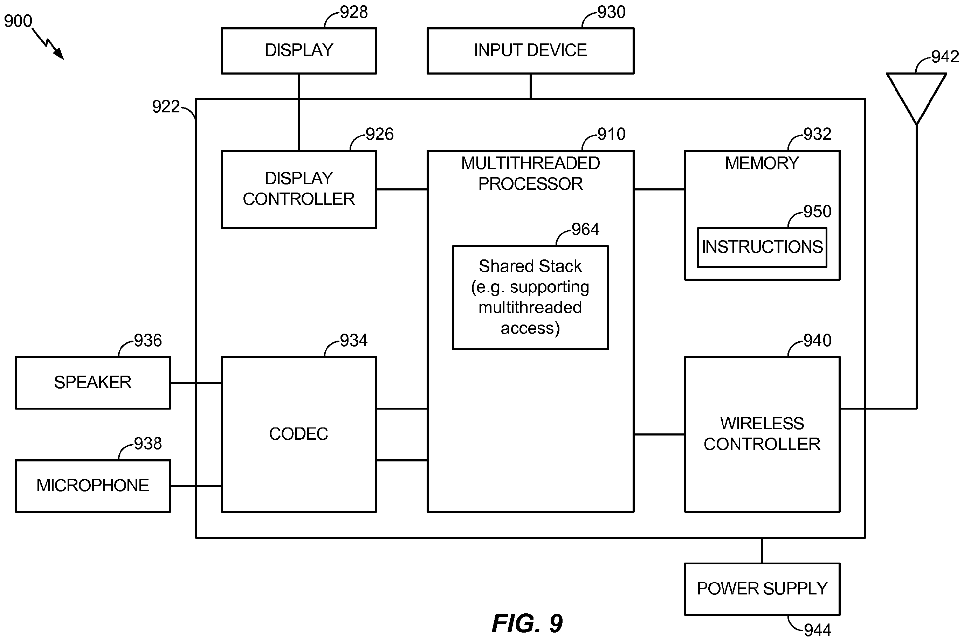

Referring to FIG. 9, a block diagram of a particular illustrative embodiment of an electronic device including logic implementing multithreaded access of a shared stack 964 is depicted and generally designated 900. The device 900 includes a processor, such as a multithreaded processor 910, coupled to a memory 932. The multithreaded processor 910 includes a shared stack 964 that is accessible by multiple threads, such as a return stack. In an illustrative example, the multithreaded processor 910 includes the systems depicted in one or more of FIGS. 1-6 and may execute one or more of the methods of FIGS. 7 and 8, or any combination thereof. It should be noted that although the embodiment illustrated in FIG. 9 depicts a portable electronic device, allocation of shared stack portions as disclosed herein may be implemented at any device that includes a processor. For example, the device 900, or some portion thereof, may instead be integrated into a set-top box, a music player, a video player, an entertainment unit, a navigation device, a communications device, a personal digital assistant (PDA), a fixed location data unit, a computer, a server, or any other device having at least one processor that has a return address stack.

The memory 932 may be a computer readable tangible medium storing instructions 950 whose execution by a computer results in the allocation of a first portion of a shared stack to a first thread. For example, the instructions 950 may be executed by the multithreaded processor 910, causing the allocation of a first portion of the shared stack 964 to a first thread. The instructions 950 may further be executed causing the allocation of a second portion of the shared stack 964 to a second thread.

FIG. 9 also shows a display controller 926 that is coupled to the multithreaded processor 910 and to a display 928. A coder/decoder (CODEC) 934 can also be coupled to the multithreaded processor 910. A speaker 936 and a microphone 938 can be coupled to the CODEC 934.

FIG. 9 also indicates that a wireless controller 940 can be coupled to the multithreaded processor 910 and to a wireless antenna 942. In a particular embodiment, the multithreaded processor 910, the display controller 926, the memory 932, the CODEC 934, and the wireless controller 940 are included in a system-in-package or system-on-chip device 922. In a particular embodiment, an input device 930 and a power supply 944 are coupled to the system-on-chip device 922. Moreover, in a particular embodiment, as illustrated in FIG. 9, the display 928, the input device 930, the speaker 936, the microphone 938, the wireless antenna 942, and the power supply 944 are external to the system-on-chip device 922. However, each of the display 928, the input device 930, the speaker 936, the microphone 938, the wireless antenna 942, and the power supply 944 can be coupled to a component of the system-on-chip device 922, such as an interface or a controller.

Those of skill would further appreciate that the various illustrative logical blocks, configurations, modules, circuits, and algorithms described in connection with the embodiments disclosed herein may be implemented as electronic hardware, computer software, or combinations of both. Various illustrative components, blocks, configurations, modules, circuits, and algorithms have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The pointers of a method or algorithm described in connection with the embodiments disclosed herein may be embodied directly in hardware, in a software module executed by a processor, or in a combination of the two. A software module may reside in random access memory (RAM), flash memory, read-only memory (ROM), programmable read-only memory (PROM), erasable programmable read-only memory (EPROM), electrically erasable programmable read-only memory (EEPROM), registers, hard disk, a removable disk, a compact disc read-only memory (CD-ROM), or other forms of storage medium known in the art. An exemplary storage medium is coupled to the processor such that the processor can read information from, and write information to, the storage medium. In the alternative, the storage medium may be integral to the processor. The processor and the storage medium may reside in an application-specific integrated circuit (ASIC). The ASIC may reside in a computing device or a user terminal. In the alternative, the processor and the storage medium may reside as discrete components in a computing device or user terminal.

The previous description of the disclosed embodiments is provided to enable a person skilled in the art to make or use the disclosed embodiments. Various modifications to these embodiments will be readily apparent to those skilled in the art, and the principles defined herein may be applied to other embodiments without departing from the scope of the disclosure. Thus, the present disclosure is not intended to be limited to the embodiments shown herein but is to be accorded the widest scope possible consistent with the principles and novel features as defined by the following claims.

## Claims

1. An apparatus comprising:
a shared stack comprising entries; and
a controller operable to selectively allocate a first portion of the shared stack to a first thread and to selectively allocate a second portion of the shared stack to a second thread, and to dynamically resize the first portion and the second portion to allow the first thread to claim an oldest entry that was within the second portion before the resizing, the resizing being based on usage of the first portion by the first thread, on usage of the second portion by the second thread, and on a fairness policy.

2. The apparatus of claim 1, wherein the first portion is non-contiguous with the second portion or contiguous with the second portion.

3. The apparatus of claim 1, wherein the shared stack is selected from the group consisting of a hardware stack and a random access memory (RAM).

4. The apparatus of claim 1, further comprising a processor that includes a multithreaded processor core configured to generate stack operation requests associated with the shared stack.

5. The apparatus of claim 1, wherein the controller is operative to respond to a stack operation request, and wherein the stack operation request includes at least one of a push and a pop or a function return address.

6. The apparatus of claim 1, wherein the controller associates each of the first thread and the second thread with a respective set of pointers, and wherein the controller resizes the first portion and the second portion by updating the respective sets of pointers to allow the first thread to claim the oldest entry that was within the second portion before the resizing.

7. The apparatus of claim 1, wherein the first portion and the second portion are dynamically allocated based on the fairness policy.

8. The apparatus of claim 1, wherein the controller includes for each of the first thread and the second thread:
a bottom entry pointer configured to point to a bottom-most entry of the shared stack to which the respective thread is allowed to write;
a top entry pointer configured to point to a top-most entry of the shared stack to which the respective thread is allowed to write;
a top of stack pointer configured to point to a most recently written entry of the shared stack associated with the respective thread; and
a bottom of stack pointer configured to point to an oldest valid entry of the shared stack associated with the respective thread.

9. The apparatus of claim 1, wherein the controller includes, for each of the first thread and the second thread, a thread active status bit configured to indicate whether the respective thread is executing a process.

10. The apparatus of claim 1, wherein the controller includes, for each of the first thread and the second thread, an empty bit configured to indicate whether any entry of the shared stack associated with the respective thread is used.

11. The apparatus of claim 1, wherein the controller includes, for each of the first thread and the second thread, a wrapped stack bit configured to indicate whether the respective thread has wrapped within the shared stack.

12. The apparatus of claim 1, wherein the controller is configured to predict a function return address, wherein a first instruction determines the return address, and wherein a shared stack miss prompts a second instruction to determine the function return address.

13. The apparatus of claim 1, further comprising a device selected from the group consisting of a set top box, a music player, a video player, an entertainment unit, a navigation device, a communications device, a personal digital assistant (PDA), a fixed location data unit, and a computer, into which at least one of the controller and the memory is integrated.

14. A method of managing a stack shared by multiple threads of a processor, the shared stack comprising entries, the method comprising:
allocating a first portion of a the shared stack to a first thread;
allocating a second portion of the shared stack to a second thread; and
resizing dynamically the first portion and the second portion to allow the first thread to claim an oldest entry that was within the second portion before the resizing, the residing being based on usage of the first portion by the first thread, on usage of the second portion by the second thread, and on a fairness policy.

15. The method of claim 14, further comprising:
associating each of the first thread and the second thread with a respective set of pointers; wherein resizing dynamically the first portion and the second portion comprises updating the respective sets of pointers.

16. The method of claim 14, further comprising allowing the first thread to at least one of push and pop a return address with respect to an element of the first portion of the shared stack, and allowing the second thread to at least one of push and pop a return address with respect to an element of the second portion of the shared stack.

17. The method of claim 14, further comprising forming the shared stack within a portion of a memory; using the shared stack to predict a return address; dynamically allocating the first portion and the second portion or adjusting a size of at least one of the first portion and the second portion,

18. The method of claim 14, further comprising:
allocating different portions of the shared stack to respective different threads of the multiple threads; and
fixing a size of at least one of the allocated different portions of the shared stack.

19. The method of claim 14, further comprising limiting a size of the first portion allocated to the first thread according to a fairness policy, wherein limiting the size of the first portion according to the fairness policy comprises limiting the size of the first portion based upon at least one of a maximum number of entries associated with the first thread and a percentage of usage of the shared stack by the first thread.

20. A computer-readable medium comprising instructions that, when executed by a processor according to any of claims 1-13 cause the processor to perform a method according to any of claims 14 to 19, and wherein the instructions are executable by a processor integrated in a device selected from the group consisting of a set top box, a music player, a video player, an entertainment unit, a navigation device, a communications device, a personal digital assistant (PDA), a fixed location data unit, and a computer.

## Patentansprüche

1. Eine Vorrichtung, die Folgendes aufweist:
einen gemeinsam verwendeten Stapel, der Einträge aufweist; und
eine Steuervorrichtung bzw. einen Controller, der betreibbar ist zum selektiven Zuteilen eines ersten Teils des gemeinsam verwendeten Stapels zu einem ersten Thread und zum selektiven Zuteilen eines zweiten Teils des gemeinsam verwendeten Stapels zu einem zweiten Thread und zum dynamischen Ändern der Größe des ersten Teils und des zweiten Teils um zu gestatten, dass der erste Thread einen ältesten Eintrag beansprucht, der vor dem Ändern der Größe innerhalb des zweiten Teils war, wobei das Ändern der Größe auf einer Nutzung des ersten Teils durch den ersten Thread, auf einer Nutzung des zweiten Teils durch den zweiten Thread und auf einer Fairness-Richtlinie basiert.

2. Vorrichtung nach Anspruch 1, wobei der erste Teil nicht an den zweiten Teil angrenzt oder an den zweiten Teil angrenzt.

3. Vorrichtung nach Anspruch 1, wobei der gemeinsam verwendete Stapel aus der Gruppe ausgewählt wird, die aus einem Hardwarestapel und einem Speicher mit wahlfreiem Zugriff bzw. RAM (RAM = random access memory) besteht.

4. Vorrichtung nach Anspruch 1, die weiter einen Prozessor aufweist, der einen Multithread-Prozessorkern beinhaltet, der konfiguriert ist zum Generieren von Stapelvorgangs- bzw. -operationsanfragen, die mit dem gemeinsam verwendeten Stapel assoziiert sind

5. Vorrichtung nach Anspruch 1, wobei der Controller betreibbar ist zum Antworten auf eine Stapelvorgangsanfrage und wobei die Stapelvorgangsanfrage wenigstens eines von einem Push und einem Pop oder eine Funktionsrückkehradresse beinhaltet.

6. Vorrichtung nach Anspruch 1, wobei der Controller sowohl den ersten Thread als auch den zweiten Thread mit einem jeweiligen Satz von Zeigern assoziiert und wobei der Controller die Größe des ersten Teils und des zweiten Teils ändert durch Aktualisieren des jeweiligen Satzes von Zeigern um dem ersten Thread zu gestatten, den ältesten Eintrag zu beanspruchen, der vor dem Ändern der Größe innerhalb des zweiten Teils war.

7. Vorrichtung nach Anspruch 1, wobei der erste Teil und der zweite Teil dynamisch basierend auf der Fairness-Regel zugeteilt werden.

8. Vorrichtung nach Anspruch 1, wobei der Controller für sowohl den ersten Thread als auch den zweiten Thread Folgendes beinhaltet:
einen Zeiger des untersten Eintrags, der konfiguriert ist zum Zeigen auf einen untersten Eintrag des gemeinsam verwendeten Stapels, auf welchen es dem jeweiligen Thread gestattet ist zu schreiben;
einen Zeiger des obersten Eintrags, der konfiguriert ist zum Zeigen auf einen obersten Eintrag des gemeinsam verwendeten Stapels, auf welchen es dem jeweiligen Thread gestattet ist zu schreiben;
einen Zeiger auf das obere Ende des Stapels, der konfiguriert ist zum Zeigen auf einen am aktuellsten geschriebenen Eintrag des gemeinsam verwendeten Stapels, der mit dem jeweiligen Thread assoziiert ist; und
einen Zeiger auf das untere Ende des, der konfiguriert ist zum Zeigen auf einen ältesten gültigen Eintrag in dem gemeinsam verwendeten Stapel, der mit dem jeweiligen Thread assoziiert ist.

9. Vorrichtung nach Anspruch 1, wobei der Controller für sowohl den ersten Thread als auch den zweiten Thread ein Thread-Aktiv-Statusbit beinhaltet, das konfiguriert ist anzuzeigen, ob der entsprechende Thread einen Prozess ausführt.

10. Vorrichtung nach Anspruch 1, wobei der Controller für sowohl den ersten Thread als auch den zweiten Thread ein leeres Bit beinhaltet, das konfiguriert ist anzuzeigen, ob irgendein Eintrag des gemeinsam verwendeten Stapels, der mit dem jeweiligen Thread assoziiert ist, verwendet wird.

11. Vorrichtung nach Anspruch 1, wobei der Controller für sowohl den ersten Thread auch als auch den zweiten Thread ein umgeschlagenes Stapelbit bzw. Wrapped-Stapelbit aufweist, das konfiguriert ist anzuzeigen, ob der entsprechende Thread innerhalb des gemeinsam verwendeten Stapels umgeschlagen ist.

12. Vorrichtung nach Anspruch 1, wobei der Controller konfiguriert ist zum Vorhersagen einer Funktionsrückkehradresse, wobei ein erster Befehl die Rückkehradresse bestimmt und wobei ein Fehltreffer des gemeinsam verwendeten Stapels einen zweiten Befehl zum Bestimmen der Funktionsrückkehradresse auslöst.

13. Vorrichtung nach Anspruch 1, die weiter eine Einrichtung aufweist, die aus der Gruppe ausgewählt ist, die aus einer Set-Top-Box, einer Musikabspielvorrichtung, eine Videoabspielvorrichtung, einer Unterhaltungseinheit, einer Navigationseinrichtung, einer Kommunikationseinrichtung, einem persönlichen digitalen Assistenten bzw. PDA, einer Dateneinheit mit festem Standort und einem Computer besteht, in die bzw. in den der Controller und/oder der Speicher integriert sind.

14. Ein Verfahren zum Verwalten eines Stapels, der durch mehrere Threads eines Prozessors gemeinsam verwendet wird, wobei der gemeinsam verwendete Stapel Einträge aufweist, wobei das Verfahren Folgendes aufweist:
Zuteilen eines ersten Teils des gemeinsam verwendeten Stapels zu einem ersten Thread;
Zuteilen eines zweiten Teils des gemeinsam verwendeten Stapels zu einem zweiten Thread; und
dynamisches Ändern der Größe des ersten Teils und des zweiten Teils um zu gestatten, dass der erste Thread einen ältesten Eintrag beansprucht, der vor dem Ändern der Größe innerhalb des zweiten Teils war, wobei das Ändern der Größe auf einer Nutzung des ersten Teils durch den ersten Thread, auf einer Nutzung des zweiten Teils durch den zweiten Thread und auf einer Fairness-Regel basiert.

15. Verfahren nach Anspruch 14, das weiter Folgendes aufweist:
Assoziieren von sowohl dem ersten Thread als auch dem zweiten Thread mit einem jeweiligen Satz von Zeigern;
wobei das dynamische Ändern der Größe des ersten Teils und des zweiten Teils Aktualisieren der jeweiligen Sätze von Zeigern aufweist.

16. Verfahren nach Anspruch 14, das weiter Gestatten des ersten Threads wenigstens eines von einem Push und einem Pop einer Rückkehradresse in Bezug auf ein Element des ersten Teils des gemeinsam verwendeten Stapels und Gestatten des zweiten Threads wenigstens eines von einem Push und einem Pop einer Rückkehradresse in Bezug auf ein Element des zweiten Teils des gemeinsam verwendeten Stapels, aufweist.

17. Verfahren nach Anspruch 14, das weiter Bilden des gemeinsam verwendeten Stapels innerhalb eines Teils eines Speichers; Verwenden des gemeinsam verwendeten Stapels zum Vorhersagen einer Rückkehradresse; dynamisches Zuteilen des ersten Teils und des zweiten Teils oder Anpassen einer Größe von wenigstens einem von dem ersten Teil und dem zweiten Teil aufweist.

18. Verfahren nach Anspruch 14, das weiter Folgendes aufweist:
Zuteilen von unterschiedlichen Teilen des gemeinsam verwendeten Stapels zu entsprechenden unterschiedlichen Threads der mehreren Threads; und Festlegen einer Größe von wenigstens einem der zugeteilten unterschiedlichen Teile des gemeinsam verwendeten Stapels.

19. Verfahren nach Anspruch 14, das weiter Begrenzen einer Größe des ersten Teils aufweist, die dem ersten Thread gemäß einer Fairness-Regel zugeteilt ist, wobei das Begrenzen der Größe des ersten Teils gemäß der Fairness-Regel Begrenzen der Größe des ersten Teils basierend auf einer maximalen Anzahl von Einträgen, die mit dem ersten Thread assoziiert ist und/oder einem Prozentsatz einer Nutzung des gemeinsam verwendeten Stapels durch den ersten Thread aufweist.

20. Ein computerlesbares Medium, das Instruktionen bzw. Befehle aufweist, die, wenn sie durch einen Prozessor gemäß einem der Ansprüche 1-13 ausgeführt werden den Prozessor veranlassen zum Durchführen eines Verfahrens gemäß einem der Ansprüche 14 bis 19, und wobei die Instruktionen durch einen Prozessor ausgeführt werden können, der in eine Einrichtung integriert ist, die aus der Gruppe ausgewählt ist, die aus einer Set-Top-Box, einer Musikabspielvorrichtung, einer Videoabspielvorrichtung, einer Unterhaltungseinheit, einer Navigationseinrichtung, einer Kommunikationseinrichtung, einem persönlichen digitalen Assistenten bzw. PDA, einer Dateneinheit mit festem Standort und einem Computer besteht.

## Revendications

1. Un appareil comprenant :
une pile partagée comprenant des entrées, et
un dispositif de commande conçu de façon à attribuer de manière sélective une première partie de la pile partagée à un premier fil et à attribuer de manière sélective une deuxième partie de la pile partagée à un deuxième fil, et à redimensionner de manière dynamique la première partie et la deuxième partie de façon à permettre au premier fil de revendiquer une entrée la plus ancienne qui se trouvait à l'intérieur de la deuxième partie avant le redimensionnement, le redimensionnement étant basé sur une utilisation de la première partie par le premier fil, sur une utilisation de la deuxième partie par le deuxième fil et sur une politique d'équité.

2. L'appareil selon la Revendication 1, où la première partie est non contiguë avec la deuxième partie ou contiguë avec la deuxième partie.

3. L'appareil selon la Revendication 1, où la pile partagée est sélectionnée dans le groupe se composant d'une pile d'équipements matériels et d'une mémoire vive (RAM).

4. L'appareil selon la Revendication 1, comprenant en outre un processeur qui comprend un coeur de processeur multifil configuré de façon à générer des demandes d'opérations de pile associées à la pile partagée.

5. L'appareil selon la Revendication 1, où le dispositif de commande est conçu de façon à réagir à une demande d'opération de pile, et où la demande d'opération de pile comprend au moins une opération parmi une poussée et une remontée ou une adresse de renvoi de fonction.

6. L'appareil selon la Revendication 1, où le dispositif de commande associe chaque fil parmi le premier fil et le deuxième fil à un ensemble respectif de pointeurs, et où le dispositif de commande redimensionne la première partie et la deuxième partie par l'actualisation des ensembles respectifs de pointeurs de façon à permettre au premier fil de revendiquer l'entrée la plus ancienne qui se trouvait à l'intérieur de la deuxième partie avant le redimensionnement.

7. L'appareil selon la Revendication 1, où la première partie et la deuxième partie sont attribuées dynamiquement en fonction de la politique d'équité.

8. L'appareil selon la Revendication 1, où le dispositif de commande comprend pour chaque fil parmi le premier fil et le deuxième fil :
un pointeur vers les entrées du bas configuré de façon à pointer vers une entrée la plus basse de la pile partagée vers laquelle le fil respectif est autorisé à écrire,
un pointeur vers les entrées du haut configuré de façon à pointer vers une entrée la plus haute de la pile partagée vers laquelle le fil respectif est autorisé à écrire,
un pointeur de sommet de pile configuré de façon à pointer vers une entrée écrite le plus récemment de la pile partagée associée au fil respectif, et
un pointeur de pied de pile configuré de façon à pointer vers une entrée valide la plus ancienne de la pile partagée associée au fil respectif.

9. L'appareil selon la Revendication 1, où le dispositif de commande comprend, pour chaque fil parmi le premier fil et le deuxième fil, un bit de statut actif de fil configuré de façon à indiquer si le fil respectif exécute un procédé.

10. L'appareil selon la Revendication 1, où le dispositif de commande comprend, pour chaque fil parmi le premier fil et le deuxième fil, un bit vide configuré de façon à indiquer si une entrée quelconque de la pile partagée associée au fil respectif est utilisée.

11. L'appareil selon la Revendication 1, où le dispositif de commande comprend, pour chaque fil parmi le premier fil et le deuxième fil, un bit de pile enroulé configuré de façon à indiquer si le fil respectif s'est enroulé à l'intérieur de la pile partagée.

12. L'appareil selon la Revendication 1, où le dispositif de commande est configuré de façon à prédire une adresse de renvoi de fonction, où une première instruction détermine l'adresse de renvoi, et où un échec de pile partagée sollicite une deuxième instruction à déterminer l'adresse de renvoi de fonction.

13. L'appareil selon la Revendication 1, comprenant en outre un dispositif sélectionné dans le groupe se composant d'un décodeur, d'un lecteur de musique, d'un lecteur vidéo, d'une unité de divertissement, d'un dispositif de navigation, d'un dispositif de communication, d'un assistant numérique personnel (PDA), d'une unité de données à emplacement fixe et d'un ordinateur, auquel au moins un élément parmi le dispositif de commande et la mémoire est intégré.

14. Un procédé de gestion d'une pile partagée par une pluralité de fils d'un processeur, la pile partagée comprenant des entrées, le procédé comprenant :
l'attribution d'une première partie de la pile partagée à un premier fil,
l'attribution d'une deuxième partie de la pile partagée à un deuxième fil, et
le redimensionnement dynamique de la première partie et de la deuxième partie de façon à permettre au premier fil de revendiquer une entrée la plus ancienne qui se trouvait à l'intérieur de la deuxième partie avant le redimensionnement, le redimensionnement étant basé sur une utilisation de la première partie par le premier fil, sur une utilisation de la deuxième partie par le deuxième fil et sur une politique d'équité.

15. Le procédé selon la Revendication 14, comprenant en outre :
l'association de chaque fil parmi le premier fil et le deuxième fil à un ensemble respectif de pointeurs, où le redimensionnement dynamique de la première partie et de la deuxième partie comprend l'actualisation des ensembles respectifs de pointeurs.

16. Le procédé selon la Revendication 14, comprenant en outre l'autorisation du premier fil à au moins une opération parmi une poussée et une remontée d'une adresse de renvoi par rapport à un élément de la première partie de la pile partagée, et l'autorisation du deuxième fil à au moins une opération parmi une poussée et une remontée d'une adresse de renvoi par rapport à un élément de la deuxième partie de la pile partagée.

17. Le procédé selon la Revendication 14, comprenant en outre la formation de la pile partagée à l'intérieur d'une partie d'une mémoire, l'utilisation de la pile partagée de façon à prédire une adresse de renvoi, l'attribution dynamique de la première partie et de la deuxième partie ou l'ajustement d'une taille d'au moins une partie parmi la première partie et la deuxième partie.

18. Le procédé selon la Revendication 14, comprenant en outre :
l'attribution de différentes parties de la pile partagée à différents fils respectifs de la pluralité de fils, et
la fixation d'une taille d'au moins une des différentes parties attribuées de la pile partagée.

19. Le procédé selon la Revendication 14, comprenant en outre la limitation d'une taille de la première partie attribuée au premier fil en fonction d'une politique d'équité, où la limitation de la taille de la première partie en fonction de la politique d'équité comprend la limitation de la taille de la première partie en fonction d'au moins un élément parmi un nombre maximum d'entrées associées au premier fil et un pourcentage d'utilisation de la pile partagée par le premier fil.

20. Un support lisible par ordinateur contenant des instructions qui, lorsqu'elles sont exécutées par un processeur selon l'une quelconque des Revendications 1 à 13, amènent le processeur à exécuter un procédé selon l'une quelconque des Revendications 14 à 19, et où les instructions sont exécutables par un processeur intégré dans un dispositif sélectionné dans le groupe se composant d'un décodeur, d'un lecteur de musique, d'un lecteur vidéo, d'une unité de divertissement, d'un dispositif de navigation, d'un dispositif de communication, d'un assistant numérique personnel (PDA), d'une unité de données à emplacement fixe et d'un ordinateur.
